# EUROPEAN PATENT APPLICATION

(11) **EP 2 801 457 A1**
(43) Date of publication of application: **12.11.2014**
(21) Application number: 13425069.5
(22) Date of filing: 07.05.2013
(51) Int. Cl.: B28B 11/12

(54) **Method and plant for manufacturing shaped ceramic articles**

(71) Applicant: Sistemas Tecnicos de Castellon, S.L., 12006 Castellon (ES)
(72) Inventor: Garrido Pascual, Jose, 12560 Benicasim, Castellon (ES)
(74) Representative: Modiano, Micaela Nadia

(57) **Abstract**

A method of producing shaped ceramic manufactured articles, comprising:
- a step of molding a ceramic mixture so as to obtain at least one substantially sheet-like semifinished blank (S) and
- a step of firing the semifinished blank (S) so as to obtain a ceramic manufactured article,
- a machining step comprising the removal of material from at least one portion of at least one of the main faces of the semifinished blank (S), which is carried out before the firing step.

## Description

The present invention relates to a method of producing shaped ceramic manufactured articles.

In the field of architecture and of furnishing the use is now widespread of ceramic slabs of large dimensions which are directly used to provide floors and coverings, or are further worked to obtain shaped elements for decorative purposes, i.e. worktops and/or countertops.

In order to obtain, for example, a worktop for a kitchen or a countertop for an item of bathroom furniture, such slabs, in addition to being cut perimetrically to measure, must be perforated for the insertion of cooktops, wash basins or others.

Likewise, it is known to make incisions for decorative purposes or customization on such ceramic slabs.

All the above mentioned types of work are usually carried out on fired ceramic slabs, by way of using adapted machine tools equipped with water-cooling systems for the machining tools.

This method of working is not devoid of drawbacks among which is the fact that, in consideration of the hardness of the fired ceramic material which is to be worked on, such machining involves a considerable consumption of energy and considerable execution times, and requires the use of expensive machine tools and the frequent substitution of worn tools.

All these aspects appreciably influence the costs of carrying out such work, as a result limiting the possibility of using such ceramic slabs on the market.

Moreover, the necessity of cooling the machining tools involves the consumption of considerable quantities of water and complicates the possible recovery of ceramic dust formed during the working, which is mixed with water forming mud waste.

The aim of the present invention is to eliminate the above mentioned drawbacks of the background art by providing a method of producing ceramic manufactured articles which makes it possible to considerably reduce cycle times and costs.

In particular, the aim of the present invention is to make it possible to obtain shaped manufactured or worked articles so as to obtain cut or bas-relief decorations using machinery with a simple structure and low consumption and with reduced wear of the machining tools.

Within this aim, another object of the present invention is to avoid the use of water to cool the machining tools, thus reducing the environmental impact of the machining carried out.

Another object of the present invention is to enable an effective recovery of the ceramic material removed in the machining step.

Another object of the present invention is to be flexible and safe in use, and easy and practical to implement.

This aim and these and other objects which will become better apparent hereinafter are all achieved by the present method of producing shaped ceramic manufactured articles comprising
- a step of molding a ceramic mixture so as to obtain at least one substantially sheet-like semifinished blank and
- a step of firing said semifinished blank so as to obtain a ceramic manufactured article,
   **characterized in that** it comprises
- a machining step comprising the removal of material from at least one portion of at least one of the main faces of said semifinished blank, which is carried out before said firing step.

Further characteristics and advantages of the present invention will become better apparent from the detailed description of a preferred, but not exclusive, embodiment of a plant for implementing the method of producing shaped ceramic manufactured articles according to the invention, which is illustrated for the purposes of non-limiting example in the accompanying drawings wherein:

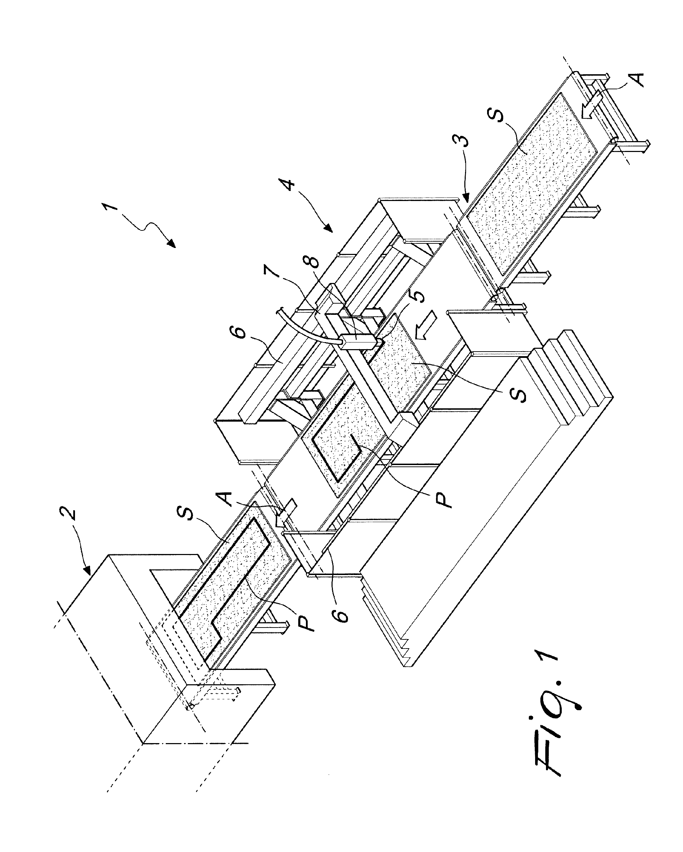

Figure 1 is a schematic perspective view of a portion of a plant for implementing the method of production according to the invention;

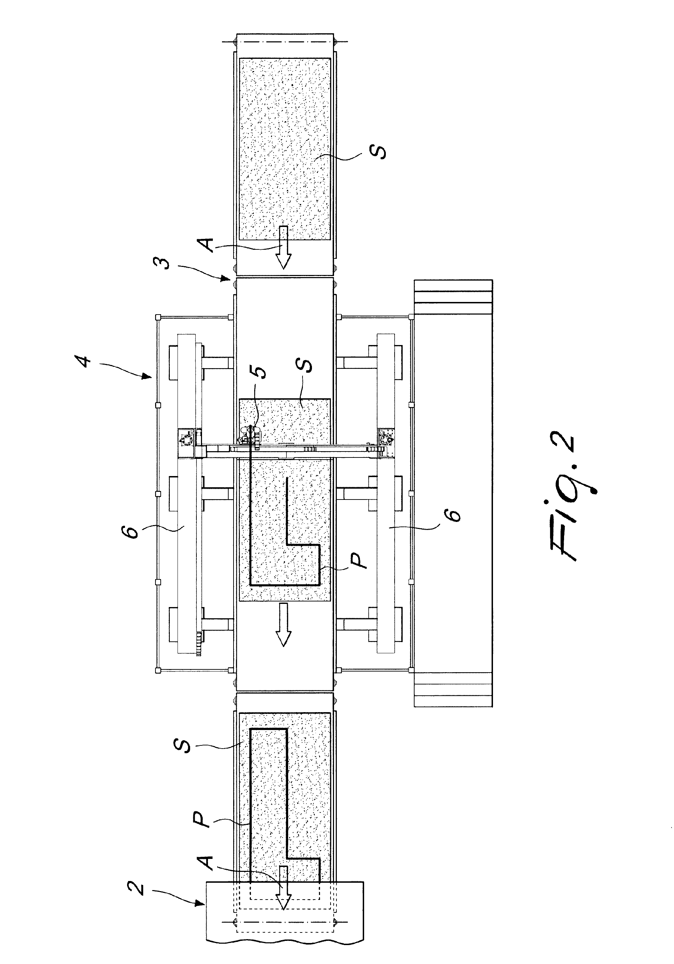

Figure 2 is a schematic plan view of the portion of plant in Figure 1.

The method of production according to the invention involves an initial step of molding a ceramic mixture so as to obtain at least one substantially sheet-like semifinished blank and a step of firing such semifinished blank so as to obtain a ceramic manufactured article.

Such operating steps can be carried out using technologies known to the person skilled in the art. Moreover, the type of mixture used, as well as the shape and the dimensions of the manufactured article obtained can vary according to specific requirements. However, the method according to the invention is particularly useful for machining large format ceramic slabs (for example 1.7m x 3.7m) made from clayey mixtures.

According to the invention, between the aforementioned steps of molding and firing there is an intermediate step of machining the semifinished blank while it is still unfired, which involves the removal of material from at least one portion of at least one of the main faces of the semifinished blank, the term "main faces" being used to mean those of greater surface area.

Generally, the main face that undergoes such machining is the face that is intended to remain in view following the use of the manufactured article.

Such removal can affect the entire thickness of the semifinished blank, for example, if it is desired to obtain small holes or slots, or perforated decorations, before firing. Alternatively, the removal can affect a portion of the thickness of at most 95%. Shallower thicknesses of removed material correspond to carrying out decorations (incisions or bas-reliefs) on the semifinished blank, while deeper removals can enable the separation of portions of the manufactured article as will be better explained below.

In fact, if the removal of material occurs along a line that is closed so as to define at least one inner region which is connected to the remaining outer region of the semifinished blank by the thickness of material remaining at the end of the track cut in the removal step, a step of stressing the manufactured article can be carried out after the firing, so as to obtain the separation of the inner region from the remaining outer region. Such step can consist, for example, of exerting pressure on the inner region until it causes the connecting strip with the outer region to fracture.

This methodology is very useful if large holes or slots need to be made in the ceramic manufactured article, for example for the flush-mounting of washbasins or cooktops, in that it makes it possible to execute the machining on the unfired semifinished blank, considerably reducing production times and costs with respect to conventional machining of the fired manufactured article.

In fact it is entirely evident that, although denser, the unfired ceramic mixture offers less mechanical resistance than the fired ceramic material, with consequent reduction in energy consumption and in wear of the tools, and structural simplification of the machine tools used for machining. Moreover, the lower friction that develops between the tools and the material to be worked makes it possible to avoid water-cooling systems for the tools.

On the ceramic manufactured article, at most a finishing machining has to be performed at the slot or hole obtained, in order to remove any burrs on the perimeter thereof.

Moreover, the machining step can advantageously include aspiration of the dust from the ceramic mixture in the machining region during the removal of the material, and such dust can be easily recovered and reused since the machining is carried out dry.

Generally there can also be a drying step, after the molding step and before the machining step, which is carried out according to conventional technologies known to the person skilled in the art.

Moreover, preferably there is a step of acquisition of at least one linear dimension of the semifinished blank, and preferably of all three. Such step makes it possible, in particular, to check the thickness of the semifinished blank, as well as the plan dimensions thereof and the correct centering thereof in order to correctly position the tool for the removal of material.

Similarly advantageously, there is a step of acquisition of a profile to be reproduced on the semifinished blank by way of the removal of material, which is derived in advance from a final image to be obtained on the ceramic manufactured article in consideration of the size shrinkage of the ceramic mixture in the firing step.

The accompanying figures illustrate a portion of a plant 1 for implementing the method described above.

In particular, the plant 1 comprises a station for molding a ceramic mixture so as to obtain at least one substantially sheet-like semifinished blank S and a station 2 for firing such semifinished blank so as to obtain at least one corresponding ceramic manufactured article.

Such stations are positioned in succession along a direction of advancement A and the plant 1, preferably, continuously processes a plurality of semifinished blanks S, being provided with means of transfer 3 of the semifinished blanks along the advancement direction A through the above mentioned stations.

Such transfer means 3 are constituted by conventional conveyor belts.

The molding station, not shown, uses conventional machinery, such as presses for compacting the ceramic mixture loaded in adapted conventional molds, such presses being conveniently dimensioned in relation to the geometry of the semifinished blank that is to be processed.

The firing station 2, only partially visible in the figures, is of the type of a conventional kiln, preferably continuous.

The plant 1 can include, moreover, immediately downstream of the molding station, a station for drying before firing.

According to the invention the plant 1 includes, between the molding station and the firing station, downstream of the drying station (if included) along the advancement direction A, a station 4 for the dry machining of the semifinished blank S comprising at least one tool 5 for the removal of material from at least one portion of at least one main face of the semifinished blanks.

In particular, in such machining station 4 the semifinished blanks S are fed by the conveyor belt 3 with the corresponding main face that is intended to remain in view after installation directed upward and the removal of material is carried out on such face.

However the possibility is not ruled out that such machining can be done on the other side as well, after turning over the semifinished blank S.

Such machining station 4 has two sliding guides 6 arranged parallel to the advancement direction A on opposite sides of the conveyor belt 3 and a bridge 7 associated therewith which can slide alternately along the same advancement direction.

The bridge 7 supports a head 8 which supports the tool 5 which can slide alternately along the bridge and can move in a vertical direction.

In this manner the tool 5 is provided with three degrees of freedom in translational motion along the three Cartesian axes.

The machining station 4 includes, moreover, automatic means of actuation of the movement of the tool 5 along such axes, for example of the hydraulic or pneumatic type, not detailed since they are of conventional type.

The tool 5 is also of conventional type and can have a different shape structure in relation to the type of machining to be executed.

Preferably, the machining station is provided with a magazine of tools which are mutually interchangeable.

Advantageously, the machining station 4 comprises an electronic control unit, not shown, which is provided with means of acquisition of a profile P to be reproduced on the semifinished blank S currently being worked on by way of the removal of material and which is adapted to actuate the movement of the tool 5 along a path corresponding to such profile.

Such profile can consist, for example, of an image to be obtained in bas-relief on the semifinished blank S, or a cut decoration, or a closed perimeter defining at least one inner region and an outer region on the semifinished blank S for performing an additional operating step described below.

Moreover, the machining station 4 can comprise means of detection of at least one linear direction of the semifinished blank which are functionally connected in input to the above mentioned electronic unit.

Such detection means can be constituted by conventional transducers, for example of the laser type.

In particular, the acquisition of the thickness of the semifinished blank S can enable an adequate control of the amount of material to remove, while the acquisition of the linear plan dimensions makes it possible to check the positioning of the semifinished blank S and the correspondence of the profile P to be executed with the actual dimensions of such semifinished blank.

Conveniently the machining station 4 comprises means of aspiration of the dust from the ceramic mixture removed by the action of the tool 5. Such aspiration means, not shown in the drawings, can be integrated in the head 8 that supports the tool 5. In this manner all the removed material can be recovered and directly reused in the production cycle.

Moreover, downstream of the firing station 2 along the advancement direction A there can be a separation station provided with means of stressing the manufactured article.

In fact, if the profile P obtained by the removal of material traces a closed perimeter on the fired manufactured article, what is obtained is at least one inner region and an outer region which are mutually connected by a connecting strip of reduced thickness. The stressing of the manufactured article is aimed at fracturing such connecting strip and achieving the separation and removal of the inner region from the remaining outer region of the manufactured article.

Such station can moreover comprise tools for finishing the inner edge of the outer region.

In practice it has been found that the invention as described achieves the intended aim and objects and, in particular, attention is drawn to the fact that the machining according to the invention makes it possible to appreciably reduce production times and costs of ceramic manufactured articles with incisions or with surface decorations obtained on the piece, thus increasing the possibility of their being used on the market.

Moreover, performing dry machining makes it possible to avoid the use of water for cooling the tools, thus reducing the impact on the environment and facilitating the recycling of the removed material.

The invention, thus conceived, is susceptible of numerous modifications and variations, all of which are within the scope of the appended claims.

Moreover, all the details may be substituted by other, technically equivalent elements.

In practice the materials employed, as well as the contingent dimensions and shapes, may be any according to requirements without for this reason departing from the scope of protection claimed herein.

Where the technical features mentioned in any claim are followed by reference numerals and/or signs, those reference numerals and/or signs have been included for the sole purpose of increasing the intelligibility of the claims and accordingly, such reference numerals and/or signs do not have any limiting effect on the interpretation of each element identified by way of example by such reference numerals and/or signs.

## Claims

1. A method of producing shaped ceramic manufactured articles, comprising:
- a step of molding a ceramic mixture so as to obtain at least one substantially sheet-like semifinished blank and
- a step of firing said semifinished blank so as to obtain a ceramic manufactured article,
**characterized in that** it comprises
- a machining step comprising the removal of material from at least one portion of at least one of the main faces of said semifinished blank, which is carried out before said firing step.

2. The method according to claim 1, **characterized in that** said step of removal of material affects a portion of the thickness of said semifinished blank of at most 95% of the total thickness.

3. The method according to claim 1 or 2, **characterized in that** said step of removal of material is carried out along at least one line that is closed so as to define at least one inner region and an outer region which are mutually connected by a connecting strip of reduced thickness, there being moreover a step of stressing said manufactured article so as to obtain the separation of said at least one inner region from the remaining outer region, which is carried out after said firing step.

4. The method according to one or more of the preceding claims, **characterized in that** said machining step comprises aspirating the removed material proximate to the working region, said aspiration and said removal being carried out simultaneously.

5. The method according to one or more of the preceding claims, **characterized in that** it comprises a step of acquisition of at least one linear dimension of said semifinished blank, carried out before said machining step.

6. The method according to one or more of the preceding claims, **characterized in that** it comprises a step of acquisition of a profile to be reproduced on said semifinished blank by way of said removal of material, said profile being derived from a final image to be obtained on the manufactured article in consideration of the size shrinkage of said mixture in the firing step.

7. The method according to one or more of the preceding claims, **characterized in that** it comprises a step of drying said semifinished blank which is carried out before said machining step.

8. A plant (1) for the production of shaped ceramic manufactured articles, comprising a station for molding a ceramic mixture so as to obtain at least one substantially sheet-like semifinished blank (S) and a station for firing (2) said semifinished blank (S) so as to obtain at least one corresponding ceramic manufactured article, **characterized in that** it comprises a station (4) for the dry machining of said semifinished blank (S), comprising at least one tool (5) for the removal of material from at least one portion of at least one main face of the semifinished blank, there being also means of transfer (3) of said semifinished blank (S) along a direction of advancement (A) through said stations.

9. The plant (1) according to claim 8, **characterized in that** said machining station (4) comprises an electronic control unit which is provided with means of acquisition of a profile (P) to be reproduced on said semifinished blank (S) by way of the removal of material and is adapted to actuate the movement of said at least one tool (5) along a path corresponding to said profile (P).

10. The plant (1) according to claim 9, **characterized in that** said machining station (4) comprises means of detection of at least one linear direction of said semifinished blank (S) which are functionally connected in input to said electronic unit.

11. The plant (1) according to one or more of claims 8 to 10, **characterized in that** said machining station (4) comprises means of aspiration of the dust from the ceramic mixture removed by said at least one tool (5).

12. The plant (1) according to one or more of claims 8 to 11, **characterized in that** said path of removal of material is closed so as to define, on said semifinished blank (S), at least one inner region and an outer region which are mutually connected by a connecting strip of reduced thickness and which comprises a separation station, arranged downstream of said firing station (2) along said advancement direction (A), which comprises means of stressing said manufactured article in order to separate said at least one inner region from the remaining outer region.

13. The plant (1) according to one or more of claims 8 to 12, **characterized in that** it comprises a drying station which is interposed between said mixing and machining stations (4) along said advancement direction (A).
